# EUROPEAN PATENT APPLICATION

(11) **EP 3 715 542 A1**
(43) Date of publication of application: **30.09.2020**
(21) Application number: 20165675.8
(22) Date of filing: 25.03.2020
(51) Int. Cl.: E03C 1/05, F16K 11/078, E03C 1/04

(54) **ELECTRONIC WATER OUTLET TERMINAL**

(30) Priority: 25.03.2019 CN 201910227110
(71) Applicant: Xiamen Solex High-Tech Industries Co., Ltd., 361022 Xiamen, Fujian (CN)
(72) Inventor: CHEN, Huarong, Xiamen, Fujian 361022 (CN); XIONG, Wenjing, Xiamen, Fujian 361022 (CN)
(74) Representative: Hamel, Armin

(57) **Abstract**

The present disclosure discloses is an electronic water outlet terminal, comprising an electronic valve, a mechanical valve, a control module for controlling the electronic valve, and an operation handle for controlling the mechanical valve. The mechanical valve comprises a cold water inlet, a hot water inlet, and a water outlet. The electronic valve and the mechanical valve are connected in series. The control module sends a control signal to control the electronic valve to open after having received a water discharge command. When the operation handle is in a closed position, the water outlet is in fluid connection with the cold water inlet. The electronic water outlet terminal of the present disclosure can still be used by a user when the operation handle is in the closed position.

## Description

### RELATED APPLICATIONS

This application claims priority to Chinese Patent Application 201910227110.4, filed on March 25, 2019, which is incorporated herein by reference.

### FIELD OF THE DISCLOSURE

The present disclosure relates to a water outlet terminal, and in particular relates to an electronic water outlet terminal.

### BACKGROUND OF THE DISCLOSURE

At present, sensor-activated faucets on the market are provided with a handle that must be operated first, and then a sensor can be used to discharge water. However, if the handle is closed, no water can be discharged. Consumers habitually close the handle after use, resulting in the sensor-activated faucet losing its value of convenience and being hygienic to touch.

If the handle is removed and a touch sensor module or an infrared sensor module fails, the entire faucet is not usable. As sensor-activated faucets are widely used in shopping malls, airports, and other high traffic areas, it is inconvenient if the faucet is unavailable. Therefore, it would be very useful if the faucet could be switched between an electronic outlet mode and a mechanical outlet mode, and the handle would not be required when operating in the electronic outlet mode.

### BRIEF SUMMARY OF THE DISCLOSURE

The main technical problem to be solved by the present disclosure is to provide an electronic water outlet terminal that can still be used by a user when the operation handle is closed.

In order to solve the above technical problem, the present disclosure provides an electronic water outlet terminal, comprising: an electronic valve, a mechanical valve, a control module for controlling the electronic valve, and an operation handle for controlling the mechanical valve. The mechanical valve comprises a cold water inlet, a hot water inlet, and a water outlet. The electronic valve and the mechanical valve are connected in series. The control module sends a control signal to control the electronic valve to open after having received a water discharge command. When the operation handle is in a closed position, the water outlet is in fluid connection with the cold water inlet.

In another preferred embodiment, the water discharge command is a touch water discharge command, an induction water discharge command, or a wireless water discharge command.

In another preferred embodiment, the electronic valve is an electromagnetic valve.

In another preferred embodiment, the control module comprises a control box and a circuit board disposed in the control box. A signal output terminal of the circuit board is connected to the electromagnetic valve.

In another preferred embodiment, the mechanical valve comprises a fixed ceramic piece and a movable ceramic piece. The movable ceramic piece is operatively coupled to the operation handle. The fixed ceramic piece defines the cold water inlet, the hot water inlet, and the water outlet. The movable ceramic piece defines a water hole.

In another preferred embodiment, the water hole connects the cold water inlet with the water outlet when the operation handle is in the closed position.

In another preferred embodiment, the operation handle is configured to drive the movable ceramic piece to rotate. During rotation of the movable ceramic piece, the water hole connects the cold water inlet with the water outlet or the water hole concurrently connects the cold water inlet and the hot water inlet with the water outlet.

In another preferred embodiment, the electronic water outlet terminal is a faucet.

In another preferred embodiment, the faucet is a pull-out faucet.

In another preferred embodiment, a signal output terminal of the control module is connected to the electromagnetic valve.

In another preferred embodiment, the mechanical valve comprises a fixed ceramic piece and a movable ceramic piece. The operation handle is configured to drive the movable ceramic piece to slide relative to the fixed ceramic piece.

In another preferred embodiment, when the operation handle is in the closed position, the water hole is configured to always be connected to the cold water inlet during rotation of the water hole.

In another preferred embodiment, when the operation handle is in the closed position, the water hole is configured to only be connected to the cold water inlet during rotation of the water hole when the water hole is at a first position. When the operation handle is in an open position, the operation handle drives the water hole to slide to a second position configured to be connected to the hot water inlet and the cold water inlet synchronously during the rotation of the water hole.

Compared with the prior art, the technical solution of the present disclosure has the following beneficial effects:

The present disclosure provides an electronic water outlet terminal. When the operation handle is in the closed position, the cold water inlet and the water outlet of the mechanical valve are still connected. Therefore, after the user controls the electronic valve to open by touch or infrared induction, the electronic water outlet terminal can still discharge cold water as normal. The problem that the operation handle must be opened before use does not occur. When the user needs to use hot water, it is necessary to operate the operation handle to allow the water hole to concurrently connect to the cold water inlet and the hot water inlet.

### BRIEF DESCRIPTION OF THE DRAWING

FIG. 1 is a perspective appearance view showing a faucet in the first embodiment of the present disclosure;
FIG. 2 is a schematic view of a water path of a mechanical valve in the first embodiment of the present disclosure;
FIG. 3 is a schematic structural view of the mechanical valve in the first embodiment of the present disclosure;
FIG. 4 is a schematic view of a movable ceramic piece in the first embodiment of the present disclosure;
FIG. 5 shows a relative position of a fixed ceramic piece and the movable ceramic piece when an operation handle is in a closed position in the first embodiment of the present disclosure;
FIG. 6 shows the relative position of the fixed ceramic piece and the movable ceramic piece when the operation handle is in an open position in the first embodiment of the present disclosure;
FIG. 7 is a water passage diagram of the faucet when the operation handle is in the closed position in the first embodiment of the present disclosure; and
FIG. 8 is a water passage diagram of the faucet when the operation handle is in the open position in the first embodiment of the present disclosure.

### DETAILED DESCRIPTION OF THE EMBODIMENTS

In order to make the technical solutions of the present disclosure clearer, the present disclosure will be further described in conjunction with the embodiments and the accompanying drawings.

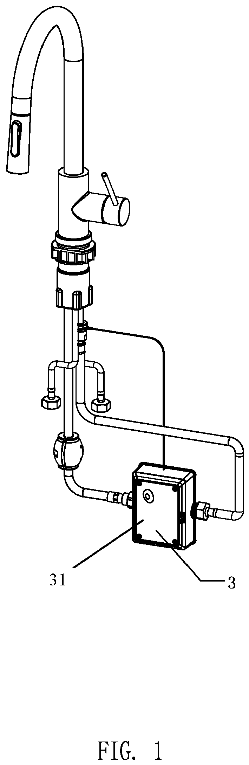

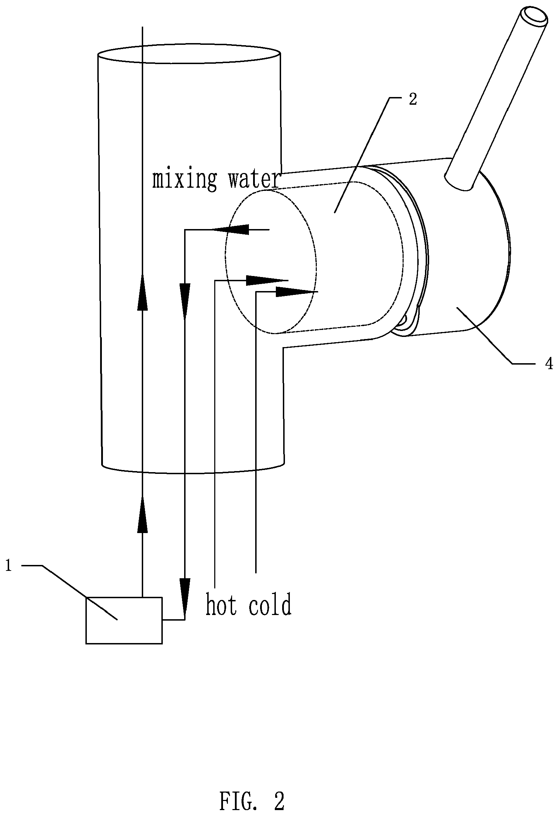

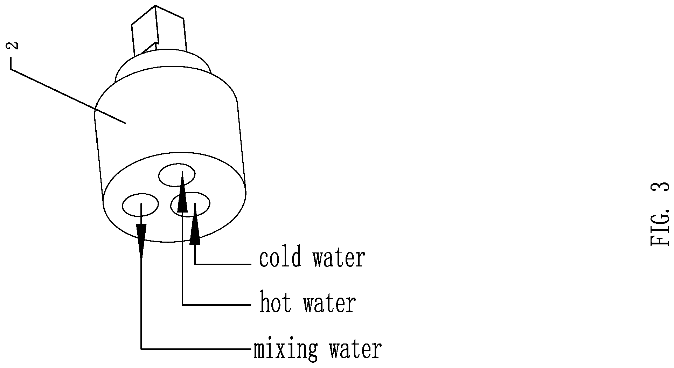

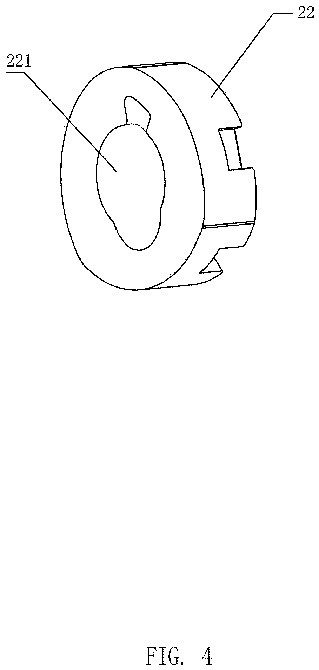

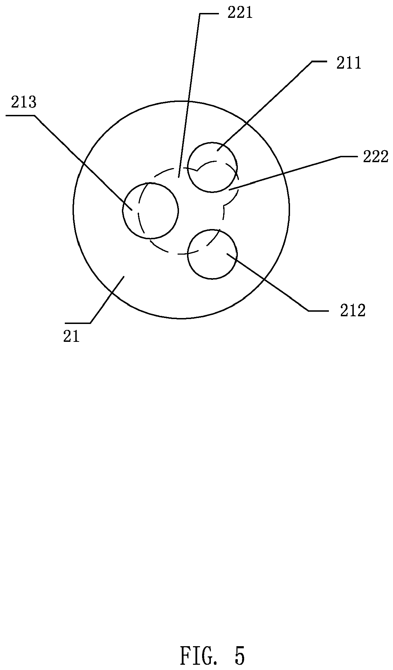

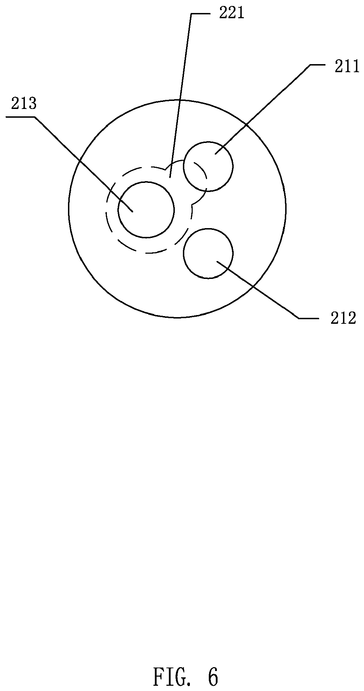

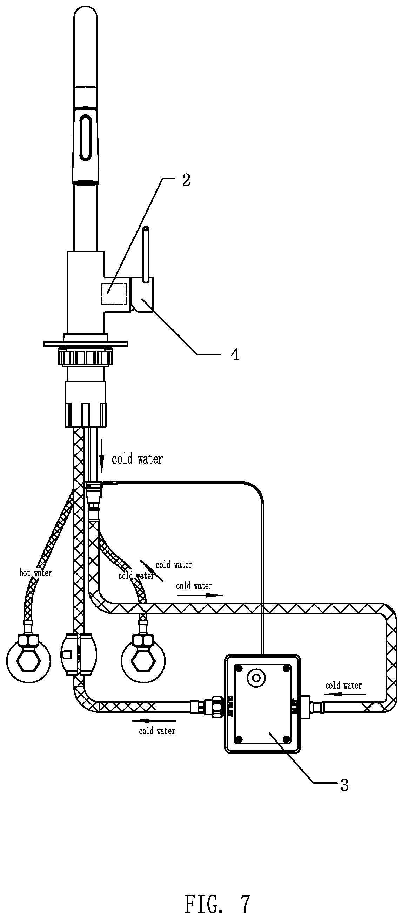

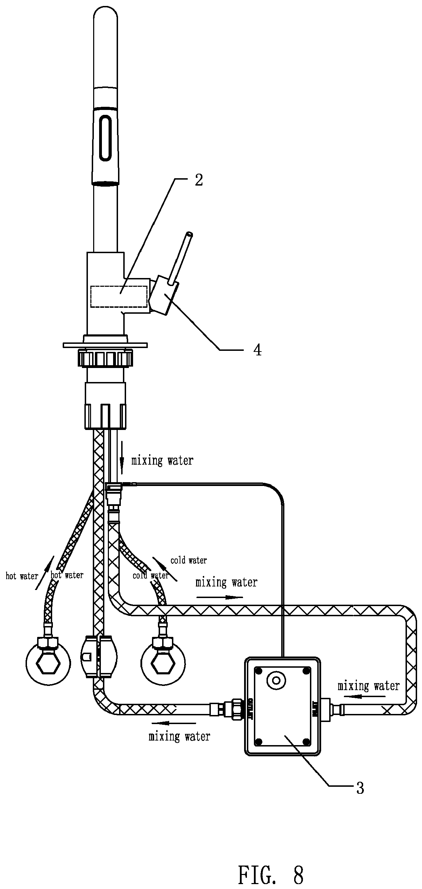

Referring to FIGS. 1-8, an electronic water outlet terminal is preferably a pull-out faucet in this embodiment. The electronic water outlet terminal comprises an electronic valve 1, a mechanical valve 2, a control module 3 for controlling the electronic valve 1, and an operation handle 4 for controlling the mechanical valve 2. The mechanical valve 2 comprises a cold water inlet 211, a hot water inlet 212, and a water outlet 213. The electronic valve 1 and the mechanical valve 2 are connected in series.

When the operation handle 4 is in a closed position, the water outlet 213 is kept in fluid connection with the cold water inlet 211. Therefore, when a user issues a water discharge command to the control module 3, the control module 3 sends a control signal to control the electronic valve 1 to open. At this time, cold water flows from the electronic water outlet terminal. Therefore, even if the user does not move the operation handle 4 to an open position, the cold water can be used as normal. Thus, the problem that the operation handle 4 must be moved to the open position before use does not occur.

In this embodiment, the water discharge command is a touch water discharge command, an induction water discharge command, or a wireless water discharge command. Only a touch module, an infrared module, or wireless module, respectively, needs to be disposed in the electronic water outlet terminal. The touch module, the infrared module, and the wireless module are conventional and are not within the scope of protection for the present disclosure. Therefore, in this embodiment, the structure of the touch module, the infrared module, and the wireless module is not further described.

The electronic valve 1 is an electromagnetic valve. Those skilled in the art can also use other electronic valves as desired, which is a simple replacement of the embodiment.

The control module 3 comprises a control box 31 and a circuit board (the circuit board in not shown is FIGS. 1-8) disposed in the control box. A signal output terminal of the circuit board is connected to the electromagnetic valve. In other words, a signal output terminal of the control module 3 is connected to the electromagnetic valve. This allows the circuit board (or the control module 3) to control the electromagnetic valve to open or close.

In this embodiment, the mechanical valve 2 comprises a fixed ceramic piece 21 and a movable ceramic piece 22. The movable ceramic piece 22 is operatively coupled to the operation handle 4.

The fixed ceramic piece 21 defines the cold water inlet 211, the hot water inlet 212, and the water outlet 213. The movable ceramic piece 22 defines a water hole 221. In this embodiment, the cold water inlet 211, the hot water inlet 212, and the water outlet 213 are circumferentially distributed. The water hole 221 is located inside a circumference of the movable ceramic piece 22, and a part of the water hole 221 extends outwardly to form a protruding portion 222.

When the operation handle 4 is in the closed position, the protruding portion 222 of the water hole 221 connects the cold water inlet 211 with the water outlet 213. Thus, when the operation handle 4 is in the closed position, cold water can still flow through the mechanical valve 2.

The operation handle 4 is configured to drive the movable ceramic piece 22 to rotate. During rotation of the movable ceramic piece 22, the water hole 221 connects the cold water inlet 211 with the water outlet 213 or the water hole 221 concurrently connects the cold water inlet 211 and the hot water inlet 212 with the water outlet 213. In the present embodiment, when the movable ceramic piece 22 is rotated from an initial position, a connection area between the water hole 221 and the hot water inlet 212 gradually increases, so that a water temperature of water at the water outlet 213 gradually increases.

In some embodiments, when the operation handle 4 is in the closed position, the water hole 221 is configured to always be connected to the cold water inlet 211 during rotation of the water hole 221.

In some embodiments, the operation handle 4 is configured to drive the movable ceramic piece 22 to slide relative to the fixed ceramic piece 21. When the operation handle 4 is in the closed position, the water hole 221 is configured to only be connected to the cold water inlet 211 during rotation of the water hole 221 when the water hole 221 is at a first position. When the operation handle 4 is in the open position, the operation handle 4 drives the water hole 221 to slide to a second position configured to be connected to the hot water inlet 212 and the cold water inlet 211 synchronously during the rotation of the water hole 221. At this time, the operation handle 4 is rotated to drive the movable ceramic piece 22 to rotate concurrently, and the water hole 221 is rotated to connect to the hot water inlet 212 and the cold water inlet 211 synchronously.

The structure of other parts of the pull-out faucet belongs to the prior art and are not described further in the present embodiment.

In the embodiment, the electronic water outlet terminal is a pull-out faucet. In other embodiments, the electronic water outlet terminal may be a non-pulling faucet or a shower head.

It will be apparent to those skilled in the art that various modifications and variation can be made in the present disclosure without departing from the spirit or scope of the disclosure. Thus, it is intended that the present disclosure cover the modifications and variations of this disclosure provided they come within the scope of the appended claims and their equivalents.

## Claims

1. An electronic water outlet terminal, **characterized in that** the electronic water outlet terminal comprises:
an electronic valve (1),
a mechanical valve (2),
a control module (3) for controlling the electronic valve (1), and
an operation handle (4) for controlling the mechanical valve (2), wherein
the mechanical valve (2) comprises a cold water inlet (211), a hot water inlet (212), and a water outlet (213),
the electronic valve (1) and the mechanical valve (2) are connected in series,
the control module (3) sends a control signal to control the electronic valve (1) to open after having received a water discharge command, and
when the operation handle (4) is in a closed position, the water outlet (213) is in fluid connection with the cold water inlet (211).

2. The electronic water outlet terminal according to claim 1, **characterized in that** the water discharge command is a touch water discharge command, an induction water discharge command or a wireless water discharge command.

3. The electronic water outlet terminal according to claim 2, **characterized in that** the electronic valve (1) is an electromagnetic valve.

4. The electronic water outlet terminal according to claim 3, **characterized in that**
the control module (3) comprises a control box (31) and a circuit board disposed in the control box (31), and
a signal output terminal of the circuit board is connected to the electromagnetic valve.

5. The electronic water outlet terminal according to any one of claims 1-4, **characterized in that**
the mechanical valve (2) comprises a fixed ceramic piece (21) and a movable ceramic piece (22),
the movable ceramic piece (22) is operatively coupled to the operation handle (4),
the fixed ceramic piece (21) defines the cold water inlet (211), the hot water inlet (212), and the water outlet (213), and
the movable ceramic piece defines a water hole (221).

6. The electronic water outlet terminal according to claim 5, **characterized in that** the water hole (221) connects the cold water inlet (211) with the water outlet (213) when the operation handle is in the closed position.

7. The electronic water outlet terminal according to claim 5, **characterized in that**
the operation handle (4) is configured to drive the movable ceramic piece (22) to rotate, and
during rotation of the movable ceramic piece (22), the water hole (221) connects the cold water inlet (211) with the water outlet (213) or the water hole (221) concurrently connects the cold water inlet (211) and the hot water inlet (212) with the water outlet (213).

8. The electronic water outlet terminal according to any one of claims 1-4, 6 or 7, **characterized in that** the electronic water outlet terminal is a faucet.

9. The electronic water outlet terminal according to claim 8, **characterized in that** the faucet is a pull-out faucet.

10. The electronic water outlet terminal according to claim 3, **characterized in that** a signal output terminal of the control module (3) is connected to the electromagnetic valve.

11. The electronic water outlet terminal according to claim 1, **characterized in that**
the mechanical valve (2) comprises a fixed ceramic piece (21) and a movable ceramic piece (22), and
the operation handle (4) is configured to drive the movable ceramic piece (22) to slide relative to the fixed ceramic piece (21).

12. The electronic water outlet terminal according to claim 5, **characterized in that**
when the operation handle (4) is in the closed position, the water hole (221) is configured to always be connected to the cold water inlet (211) during rotation of the water hole (221).

13. The electronic water outlet terminal according to claim 11, **characterized in that**
the movable ceramic piece (22) defines a water hole (221),
when the operation handle (4) is in the closed position, the water hole (221) is configured to only be connected to the cold water inlet (211) during rotation of the water hole (221) when the water hole (221) is at a first position, and
when the operation handle (4) is in an open position, the operation handle (4) drives the water hole (221) to slide to a second position configured to be connected to the hot water inlet (212) and the cold water inlet (211) synchronously during the rotation of the water hole (221).
